# DEMANDE DE BREVET EUROPEEN

(11) **EP 4 765 595 A1**
(43) Date de publication de la demande: **24.06.2026**
(21) Numéro de dépôt: 25225438.8
(22) Date de dépôt: 19.12.2025
(51) Int. Cl.: H02K 11/33, B60L 15/00

(54) **DISPOSITIF DE PILOTAGE D'UN MOTEUR ÉLECTRIQUE**

(30) Priorité: 20.12.2024 FR 2414991
(71) Demandeur: Valeo eAutomotive Germany GmbH, 91056 Erlangen (DE)
(72) Inventeur: BERTRAND, Mathieu, 94000 CRETEIL (FR); SIVACOUMARANE, Saranyadevi, 94000 CRETEIL (FR); DOMENGER, Laurent, 94000 CRETEIL (FR); IDOUGHI, Mohand-Laid, 94000 CRETEIL (FR)
(74) Mandataire: Valeo Powertrain Systems

(57) **Abrégé**

L'invention concerne un dispositif de pilotage (DP) d'un moteur électrique comprenant :
- un boitier (100), et
- un convertisseur de tension destiné à piloter ledit moteur électrique, ledit convertisseur de tension comprenant une carte électronique de commande (200) et un pont de puissance (300),
ladite carte électronique de commande (200) comprenant :
- un connecteur d'alimentation électrique comprenant une première borne et une deuxième borne d'alimentation destinées à être connectées électriquement respectivement au pôle positif et au pôle négatif d'une batterie délivrant une première tension,
- un premier circuit électronique ayant une première masse et destiné à être alimenté par ladite première tension, ledit premier circuit électronique comprenant une diode de suppression de tensions transitoires connecté directement entre la deuxième borne d'alimentation et la première masse, ladite première masse étant connectée électriquement audit boitier,
- un deuxième circuit électronique ayant une deuxième masse et destiné à être alimenté par une deuxième tension, différente de ladite première tension, et
- une barrière d'isolation séparant le premier circuit électronique du deuxième circuit électronique,
ledit pont de puissance étant destiné à être alimenté par ladite deuxième tension.

## Description

### Domaine technique de l'invention

La présente invention concerne un dispositif de pilotage d'un moteur électrique.

La présente invention concerne également un système de propulsion comportant ce dispositif de pilotage et un engin de mobilité comportant ce système de propulsion ou ce dispositif de pilotage.

Un engin de mobilité est par exemple un véhicule terrestre à moteur, un train, un aéronef ou bien un drone. Un véhicule terrestre à moteur est par exemple un véhicule automobile, une moto, un vélo motorisé ou bien un fauteuil roulant motorisé.

La présente invention peut s'appliquer en particulier dans le domaine des véhicules automobiles hybrides ou électriques.

### Arrière-plan technologique

On connait de l'état de la technique des systèmes de propulsion pour engin de mobilité comprenant des dispositifs de pilotage de moteurs électriques connectés simultanément à une batterie basse tension et à une batterie haute tension.

Par « basse tension », on entend une tension inférieure à 80V, de préférence inférieure ou égale à 60V. Corrélativement, on entend par « haute tension », une tension supérieure à 80V, de préférence supérieure ou égale à 100V.

Typiquement, le moteur électrique est alimenté par la batterie haute tension tandis qu'une partie de l'électronique de commande de ce moteur et/ou des capteurs divers et variés sont alimentés en basse tension.

Dans ce cas de figure, il est connu de réaliser une isolation entre la composante haute tension et la composante basse tension du système de propulsion pour protéger un utilisateur de l'engin de mobilités contre les risques d'électrocution.

La réalisation d'une isolation robuste implique des contraintes mécaniques (par exemple, la nécessité d'une grande distance d'isolement entre la composante haute tension et la composante basse tension) rendant difficile la conception de la ou des carte(s) électronique(s) des dispositifs de pilotage (par exemple, problème de routage, de dimension des composants, etc ...) et conduisant à des systèmes de pilotage de grandes dimensions.

Une isolation robuste est donc difficile et couteuse à réaliser.

En outre, même avec une isolation robuste, la perte de l'isolation entre la composante haute tension et la composante basse tension liée par exemple à la défaillance d'un composant électronique peut survenir et, dans ce cas, les risques d'électrocution de l'utilisateur réapparaissent.

Il peut ainsi être souhaité de prévoir un système de propulsion qui permette de s'affranchir d'au moins une partie des problèmes précités.

### Résumé de l'invention

Il est donc proposé, selon un premier aspect de l'invention, un dispositif de pilotage d'un moteur électrique comprenant :
- un boitier, et
- un convertisseur de tension destiné à piloter ledit moteur électrique, ledit convertisseur de tension comprenant une carte électronique de commande, ladite carte électronique de commande étant placée à l'intérieur dudit boitier et un pont de puissance comprenant plusieurs bras de commutation comportant chacun en série des commutateurs à semi-conducteur supérieur et inférieur,
ladite carte électronique de commande comprenant :
- un connecteur d'alimentation électrique comprenant une première borne et une deuxième borne d'alimentation destinée à être connectées électriquement respectivement au pôle positif et au pôle négatif d'une batterie délivrant une première tension,
- un premier circuit électronique ayant une première masse et destiné à être alimenté par ladite première tension, ledit premier circuit électronique comprenant une diode de suppression de tensions transitoires connecté directement entre la deuxième borne d'alimentation et la première masse, ladite première masse étant connectée électriquement audit boitier,
- un deuxième circuit électronique ayant une deuxième masse et destiné à être alimenté par une deuxième tension, différente de ladite première tension, et
- une barrière d'isolation séparant le premier circuit électronique du deuxième circuit électronique,
ledit pont de puissance étant destiné à être alimenté par ladite deuxième tension.

Grâce à l'invention, la composante alimentée par la deuxième tension et la composante alimentée par la première tension du dispositif de pilotage sont intégrés dans un boitier ce qui limite les risques d'électrocution lorsque le boitier est fermé et relié au châssis du véhicule.

En outre, et de façon avantageuse, la présence d'une diode de suppression de tensions transitoires, dite aussi diode TVS (de l'anglais « transient-voltage-suppression »), entre le boitier du dispositif de pilotage et la deuxième borne d'alimentation destinée à être connectée au pôle négatif de la batterie basse tension limite les tensions accessibles au niveau du connecteur d'alimentation électrique de la carte électronique, même en cas de perte d'isolation et prévient ainsi les risques d'électrocution au niveau de ce connecteur.

Ainsi, une diode de suppression de tensions transitoires TVS permet de limiter rapidement la différence de tension entre le connecteur d'alimentation électrique de la carte électronique et le boitier (connectée au châssis de l'engin de mobilité lorsque le dispositif de pilotage y est intégré). Par exemple, pour une deuxième tension de 900V et une première tension de 12V, une diode de suppression de tensions transitoires TVS correctement dimensionnée permet de limiter, en 0.5 ms, la tension au niveau du connecteur d'alimentation électrique de la carte électronique à moins de 60V.

De façon avantageuse également, la présence de la diode de suppression de tensions transitoires TVS permet de réduire les contraintes sur la robustesse de la barrière d'isolation ce qui permet de réduire l'encombrement du dispositif de pilotage et le coût de celui-ci.

Par exemple, la diode de suppression de tensions transitoires est connectée directement entre la deuxième borne d'alimentation et la première masse sans composants intermédiaires. Cela permet d'augmenter la vitesse de réponse de ladite diode.

Toujours par exemple, la diode de suppression de tensions transitoires est connectée en parallèle entre la première masse et la deuxième borne d'alimentation. Cela permet également d'augmenter la vitesse de protection par ladite diode et ainsi d'améliorer la protection dudit dispositif de pilotage.

L'invention peut en outre comporter l'une ou plusieurs des caractéristiques optionnelles suivantes, selon toute combinaison techniquement possible.

[1] De façon optionnelle, le dispositif de pilotage d'un moteur électrique comprenant en outre :
- une première et une deuxième liaison électrique,
- une paroi connectée électriquement à ladite première masse,
- ladite paroi entourant au moins partiellement ladite première et ladite deuxième liaison électrique, et
- un deuxième connecteur d'alimentation électrique accessible depuis l'extérieur dudit boitier, ledit deuxième connecteur d'alimentation électrique comprenant une première borne et une deuxième borne d'alimentation destinées à être connectées électriquement respectivement au pôle positif et au pôle négatif de ladite batterie délivrant ladite première tension, ladite première borne et ladite deuxième borne d'alimentation dudit deuxième connecteur électrique étant connectée respectivement à ladite première borne et à ladite deuxième borne d'alimentation dudit connecteur électrique de ladite carte électronique de commande par respectivement ladite première liaison électrique et ladite deuxième liaison électrique.

De façon optionnelle également, la carte électronique de commande comprend une portion plane sur laquelle est positionné ledit connecteur d'alimentation électrique de ladite carte électronique de commande, ladite paroi étant en forme de cylindre droit dont une base est parallèle à ladite portion plane, ladite base comprenant une ouverture au travers de laquelle passe ladite première et ladite deuxième liaison électrique, ladite ouverture étant en vis à vis dudit connecteur d'alimentation électrique de ladite carte électronique de commande.

De façon optionnelle également, le premier circuit électronique comprend en outre une résistance connectée électriquement entre la deuxième borne d'alimentation et la première masse.

De façon optionnelle également, la première tension est une tension inférieure à 80V et ladite deuxième tension est une tension supérieure ou égale à 80V.

De façon optionnelle également, le premier circuit électronique comprend un filtre de mode commun comprenant une première et une deuxième entrées connectées respectivement aux première et deuxième bornes d'alimentation.

De façon optionnelle également, la première et la deuxième entrée du filtre de mode commun sont connectée directement, i.e. sans l'intermédiaire d'un autre composant passif ou actif, respectivement aux première et deuxième borne d'alimentation.

Selon un deuxième aspect de l'invention, il est également proposé un système de propulsion comprenant un dispositif de pilotage selon le premier aspect de l'invention et un moteur électrique piloté par ce dispositif de pilotage.

De façon optionnelle, le système de propulsion comprend outre une première batterie délivrant la première tension et connectée à la première borne et à la deuxième borne d'alimentation du deuxième connecteur d'alimentation électrique et une deuxième batterie délivrant la deuxième tension au deuxième circuit électronique.

Selon un troisième aspect de l'invention, il est également proposé un engin de mobilité comprenant un dispositif de pilotage d'un moteur électrique selon le premier aspect de l'invention ou un système de propulsion selon le deuxième aspect de l'invention.

### Brève description des figures

L'invention sera mieux comprise à l'aide de la description qui va suivre, donnée uniquement à titre d'exemple et faite en se référant aux dessins annexés dans lesquels :
- la figure 1 est une vue éclatée d'un dispositif de pilotage selon un mode de réalisation de l'invention,
- la figure 2 est une représentation schématique de la carte électronique de commande du dispositif de pilotage de la figure 1,
- la figure 3 est une représentation schématique du pont de puissance du dispositif de pilotage de la figure 1, et
- la figure 4 représente deux agrandissements de l'arrangement relatif de la carte électronique de commande, du support et du boitier du dispositif de pilotage de la figure 1.

### Description détaillée de l'invention

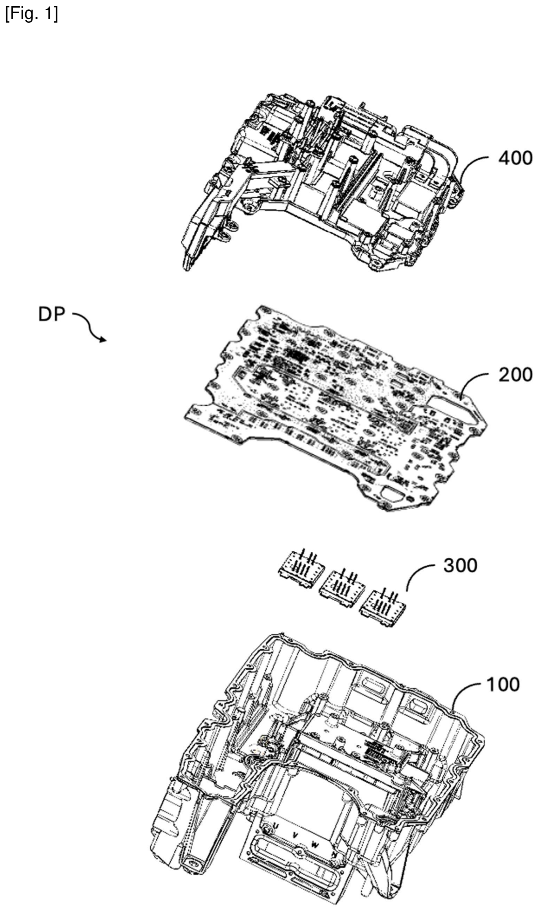

En référence à la **figure 1****,** un mode de réalisation d'un dispositif de pilotage DP d'un système selon l'invention va à présent être décrit. Ce système est par exemple destiné à être implanté dans un engin de mobilité tel qu'un véhicule automobile.

Le système selon l'invention comprend un moteur électrique ME, le dispositif de pilotage DP pilotant ce moteur électrique ME, une batterie basse tension BATL et une batterie haute tension BATH.

La batterie basse tension BATL délivre une première tension, par exemple de 12V tandis que la batterie haute tension BATH délivre une deuxième tension V2, différente de la première tension, par exemple de 900V.

Le dispositif de pilotage DP comprend
- un boitier 100,
- un convertisseur de tension destiné à piloter le moteur électrique ME, et
- un support 400 connectée électriquement audit boitier 100.

Le convertisseur de tension comprend une carte électronique de commande 200 placée à l'intérieur du boitier 100 et un pont de puissance 300.

Le support 400 permet par exemple de maintenir des éléments de filtre ou des composants annexes inséré dans le boitier 100.

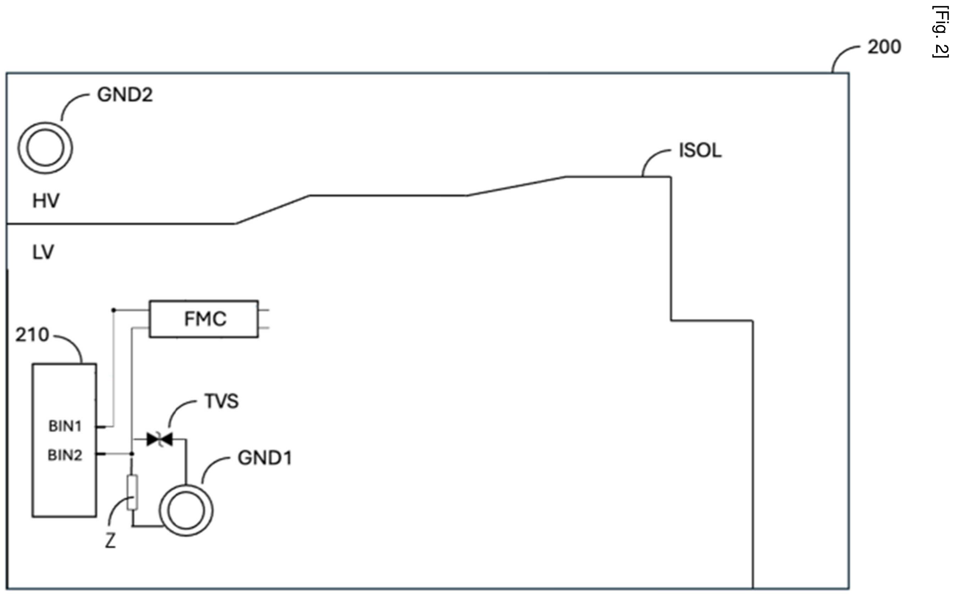

Nous allons maintenant décrire en relation avec la représentation schématique de la **figure 2****,** la carte électronique de commande 200. Celle-ci comprend :
- un connecteur d'alimentation électrique 210 comprenant une première borne BIN1 et une deuxième borne d'alimentation BIN2 connectées électriquement respectivement au pôle positif et au pôle négatif de la batterie basse tension BATL de sorte que la première tension est présente entre la première borne BIN1 et la deuxième borne d'alimentation BIN2,
- un premier circuit électronique LV ayant une première masse GND1 et alimenté par la première tension par l'intermédiaire du connecteur d'alimentation électrique 210, ce premier circuit électronique LV comprenant une diode de suppression de tensions transitoires TVS connectée directement entre la deuxième borne d'alimentation BIN2 et la première masse GND1, cette première masse étant elle-même connectée électriquement au boitier 100, par exemple, par l'intermédiaire d'une vis vissée sur un fut appartenant au boitier 100,

- un deuxième circuit électronique HV ayant une deuxième masse GND2 et destiné à être alimenté par la deuxième tension V2 délivrée par la batterie haute tension BATH, et
- une barrière d'isolation ISOL séparant physiquement et électriquement le premier circuit électronique LV du deuxième circuit électronique HV. Dans l'exemple décrit ici, cette barrière d'isolation ISOL est réalisée par une séparation physique, i.e. une ouverture de largeur suffisante pour permettre de respecter les distances minimales nécessaire à l'isolation dans l'air et le long des surfaces, dans le support de la carte électronique de commande 200.

Ainsi, de façon avantageuse, la présence de la diode de suppression de tensions transitoires TVS limite les tensions accessibles au niveau du connecteur d'alimentation électrique de la carte électronique, même en cas de perte d'isolation et prévient ainsi les risques d'électrocution au niveau de ce connecteur.

Par ailleurs, grâce à cette diode de suppression de tensions transitoires TVS, la réalisation de la barrière d'isolation ISOL est très simple, ce qui permet de réduire l'encombrement du dispositif de pilotage DP et le coût de celui-ci.

Le premier circuit électronique LV comprend, de façon optionnelle, un filtre de mode commun FMC comprenant une première et une deuxième entrée connectée respectivement aux première et deuxième bornes d'alimentation du connecteur d'alimentation électrique 210. Par ailleurs, dans ce cas de figure, le filtre de mode commun FMC est la seule composante du premier circuit électronique LV connectée à la première borne d'alimentation BIN1. En outre, la première et la deuxième entrée du filtre de mode commun FMC sont connectées directement respectivement aux première et deuxième borne d'alimentation BIN1, BIN2 du connecteur d'alimentation électrique 210. La réalisation d'un filtre de mode commun est connue de l'homme du métier et ne sera donc pas décrite ici.

De façon optionnelle également, le premier circuit électronique LV comprend une impédance Z connectée électriquement entre la deuxième borne d'alimentation BIN2 et la première masse GND1. L'impédance Z est par exemple matérialisée par une tresse de connexion électrique. La tresse s'étend notamment partiellement à l'extérieur du boitier 100.

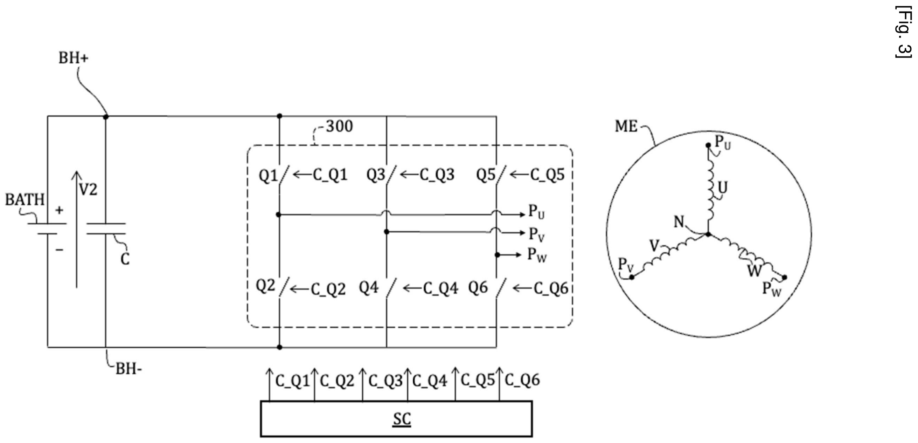

Dans l'exemple de **la** **figure 3****,** le moteur électrique ME est une machine électrique triphasée, i.e. comportant trois phases statoriques U, V, W dont, dans l'exemple décrit, des premières extrémités respectives sont connectées à un point neutre N. Les trois phases statoriques U, V, W sont pilotées respectivement par une tension de phase P_{U}, P_{V}, P_{W} fournie par le pont de puissance 300 commandé par un système de commande SC.

Le pont de puissance 300 est connecté, d'une part, aux bornes BH+, BH- de la batterie haute tension BATH et, d'autre part, au moteur électrique ME pour alimenter les phases statoriques U, V, W à partir de la deuxième tension V2 fournie par la batterie haute tension BATH.

Dans l'exemple décrit ici, le pont de puissance 300 comporte trois modules de puissance alimentés par la batterie haute tension BATH. Chaque module de puissance comporte un bras de commutation respectivement associés aux phases statoriques U, V, W. Chaque bras comporte un commutateur à semi-conducteur de côté haut Q1, Q3, Q5, encore appelé interrupteur de côté haut, connecté à la borne BH+ et un commutateur à semi-conducteur de côté bas Q2, Q4, Q6, encore appelé interrupteur de côté bas, connecté à la borne BH-. Le commutateur à semi-conducteur de côté haut et le commutateur à semi-conducteur de côté bas sont en outre connectés l'un à l'autre en un point milieu P_{U}, P_{V}, P_{W} connecté à la phase statorique U, V, W associée.

Chaque bras est destiné à être commandé par le système de commande SC pour commuter entre deux configurations. Ainsi, dans la première, dite configuration haute, l'interrupteur de côté haut est fermé et l'interrupteur de côté bas est ouvert de sorte que la tension d'entrée V2 est appliquée à une deuxième extrémité de la phase statorique U, V, W associée. Dans la deuxième, dite configuration basse, l'interrupteur de côté haut est ouvert et l'interrupteur de côté bas est fermé de sorte qu'une tension nulle est appliquée à la deuxième extrémité de la phase statorique U, V, W associée. Le pont de puissance 300 est commandé pour faire commuter chaque bras entre ces deux configurations, de manière à réguler les tensions P_{U}, P_{V}, P_{W} et les courants parcourant les phases statoriques U, V, W.

Chaque interrupteur Q1, Q2, Q3, Q4, Q5, Q6 comporte dans l'exemple décrit un transistor à effet de champ à grille isolée (également désigné par l'acronyme MOSFET de l'anglais « *Metal Oxide Semiconductor Field Effect Transistor »).* En variante, chaque interrupteur est un transistor bipolaire à grille isolée (également désigné par l'acronyme IGBT, de l'anglais *« Insulated Gate Bipolar Transistor »).*

Le système de commande SC est conçu pour transmettre des commandes d'ouverture ou de fermeture C_Q1, C_Q2, C_Q3, C_Q4, C_Q5, C_Q6 à chacun des interrupteurs Q1, Q2, Q3, Q4, Q5, Q6. Ce système de commande SC est réalisé au moins en partie par le premier circuit électronique LV et par le deuxième circuit électronique HV de la carte électronique de commande 200. En d'autres termes, une partie du système de commande SC est isolée d'une autre partie du système de commande SC par la barrière d'isolation ISOL.

En outre une capacité C est connectée entre les bornes BH+, BH-. La capacité C comporte par exemple un ou plusieurs condensateurs, par exemple des condensateurs chimiques.

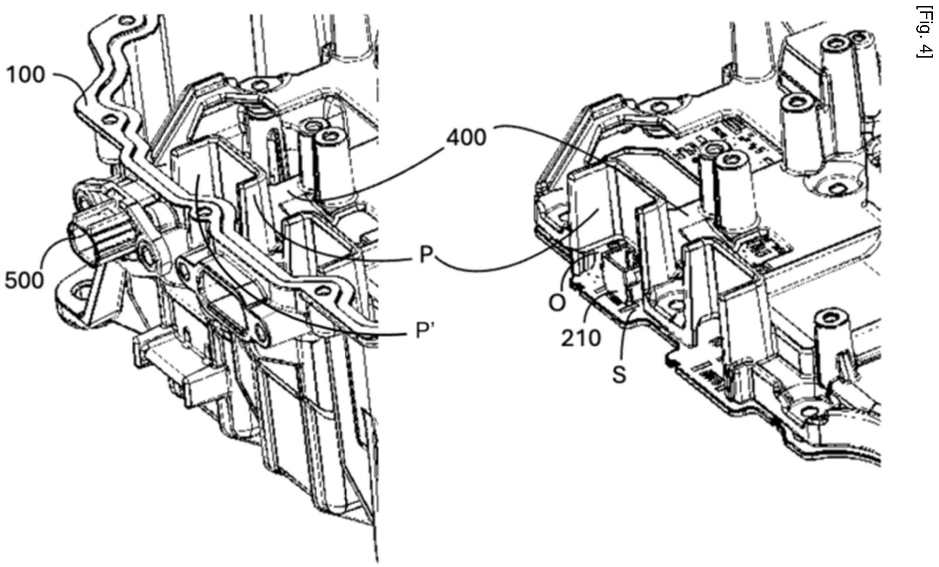

Nous allons maintenant décrire en relation avec la **figure 4****,** l'arrangement relatif du connecteur d'alimentation électrique 210 de la carte électronique de commande 200 par rapport au support 400 et au boitier 100. Sur la figure 4, l'arrangement de droite se distingue de l'arrangement de gauche par l'absence du boitier 100.

Le boitier 100 comprend tout d'abord un deuxième connecteur d'alimentation électrique 500 accessible depuis l'extérieur du boitier 100. Ce deuxième connecteur d'alimentation électrique 500 comprenant une première borne et une deuxième borne d'alimentation connectées électriquement respectivement au pôle positif et au pôle négatif de la batterie basse tension BATL. La première borne et la deuxième borne d'alimentation du deuxième connecteur électrique 500 sont connectées respectivement à la première borne BIN1 et à la deuxième borne d'alimentation BIN2 du connecteur électrique 210 de la carte électronique 200 par respectivement une première et une deuxième liaison électrique (non représentées sur la figure). La première et la deuxième liaison électrique sont par exemple des conducteurs électriques, optionnellement entourés d'une gaine isolante sauf à leurs extrémités.

Par ailleurs, la carte électronique de commande 200 comprend une portion plane S sur laquelle est positionnée le connecteur d'alimentation électrique 210 de cette carte électronique de commande 200.

En outre, le support 400 comprend une paroi P s'élevant depuis le fond de ce support 400. Cette paroi a dans l'exemple décrit ici une forme de cylindre droit dont la base présente une ouverture O. On notera que la base d'un cylindre droit n'est pas nécessairement circulaire ou ovale. Ainsi, dans l'exemple décrit ici, la base du cylindre droit a une forme proche d'un demi rectangle arrondi à ses sommets. Par ailleurs, la base du cylindre droit de la paroi P est parallèle à la portion plane S de la carte électronique de commande 200 et l'ouverture O est en vis à vis du premier circuit électronique LV de la carte électronique de commande 200, plus précisément en vis-à-vis du connecteur d'alimentation électrique 210, lorsque la carte électronique de commande 200 et le support 400 sont positionnés dans le boitier 100. Optionnellement, comme c'est le cas dans l'exemple décrit ici, le support 400 peut être fixé à la carte électronique de commande 200 de sorte à assurer le placement de l'ouverture 0 en vis-à-vis du connecteur d'alimentation électrique 210.

On notera que lorsque le support 400 est positionnée dans le boitier 100, la paroi P et la face latérale intérieure du boitier 100 sur l'extérieur de laquelle est positionné le deuxième connecteur d'alimentation électrique 500 forme une paroi P'.

Ainsi, pour connecter le deuxième connecteur d'alimentation électrique 500 fixé sur l'extérieur du boitier 100 et connecteur électrique 210 de ladite carte électronique 200, la première liaison électrique et la deuxième liaison électrique sont positionnées à l'intérieur du boitier 100 et sont entourés par la paroi P' de sorte que ces liaisons électriques sont isolées non seulement du circuit haute tension HV de la carte électronique de commande 200 mais aussi de toutes composantes haute tension du dispositif de pilotage DP.

Ainsi, de façon avantageuse, la présence de la diode de suppression de tensions transitoires TVS et des parois P, P' limitent les tensions accessibles au niveau du deuxième connecteur d'alimentation électrique 500 même en cas de perte d'isolation et prévient ainsi les risques d'électrocution au niveau de ce deuxième connecteur d'alimentation électrique 500.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

Par exemple, la machine électrique peut être une machine électrique comportant deux systèmes triphasés comportant chacun trois phases. Les deux systèmes triphasés étant destinés à être électriquement déphasés de 120° l'un par rapport à l'autre. Dans ce cas de figure, le pont de puissance comporte deux fois trois bras de commutation comportant chacun en série des commutateurs à semi-conducteur supérieur et inférieur.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

## Revendications

1. Dispositif de pilotage (DP) d'un moteur électrique comprenant :
- un boitier (100), et
- un convertisseur de tension destiné à piloter ledit moteur électrique, ledit convertisseur de tension comprenant une carte électronique de commande (200), ladite carte électronique de commande étant placée à l'intérieur dudit boitier et un pont de puissance (300) comprenant plusieurs bras de commutation comportant chacun en série des commutateurs à semi-conducteur supérieur et inférieur,
ladite carte électronique de commande (200) comprenant :
- un connecteur d'alimentation électrique (210) comprenant une première borne (BIN1) et une deuxième borne d'alimentation (BIN2) destinées à être connectées électriquement respectivement au pôle positif et au pôle négatif d'une batterie délivrant une première tension,
- un premier circuit électronique (LV) ayant une première masse (GND1) et destiné à être alimenté par ladite première tension, ledit premier circuit électronique (LV) comprenant une diode de suppression de tensions transitoires (TVS) connecté directement entre la deuxième borne d'alimentation (BIN2) et la première masse (GND1), ladite première masse (GND1) étant connectée électriquement audit boitier (100),
- un deuxième circuit électronique (HV) ayant une deuxième masse (GND2) et destiné à être alimenté par une deuxième tension (V2), différente de ladite première tension, et
- une barrière d'isolation (ISOL) séparant le premier circuit électronique (LV) du deuxième circuit électronique (HV),
ledit pont de puissance étant destiné à être alimenté par ladite deuxième tension (V2).

2. Dispositif de pilotage (DP) d'un moteur électrique selon la revendication précédente comprenant en outre :
- une première et une deuxième liaison électrique,
- une paroi (P, P') connectée électriquement à ladite première masse (GND1),
- ladite paroi (P, P') entourant au moins partiellement ladite première et ladite deuxième liaison électrique, et
- un deuxième connecteur d'alimentation électrique (500) accessible depuis l'extérieur dudit boitier (100), ledit deuxième connecteur d'alimentation électrique (500) comprenant une première borne et une deuxième borne d'alimentation destinées à être connectées électriquement respectivement au pôle positif et au pôle négatif de ladite batterie délivrant ladite première tension, ladite première borne et ladite deuxième borne d'alimentation dudit deuxième connecteur électrique étant connectée respectivement à ladite première borne (BIN1) et à ladite deuxième borne d'alimentation (BIN2) dudit connecteur électrique (210) de ladite carte électronique de commande (200) par respectivement ladite première liaison électrique et ladite deuxième liaison électrique.

3. Dispositif de pilotage (DP) d'un moteur électrique selon la revendication précédente dans lequel ladite carte électronique de commande (200) comprend une portion plane (S) sur laquelle est positionné ledit connecteur d'alimentation électrique (210) de ladite carte électronique de commande (200), ladite paroi (P, P') étant en forme de cylindre droit dont une base est parallèle à ladite portion plane, ladite base comprenant une ouverture (O) au travers de laquelle passe ladite première et ladite deuxième liaison électrique, ladite ouverture (O) étant en vis à vis dudit connecteur d'alimentation électrique (210) de ladite carte électronique de commande (200).

4. Dispositif de pilotage (DP) d'un moteur électrique selon l'une quelconque des revendications précédentes dans lequel ledit premier circuit électronique (LV) comprend en outre une résistance (R) connectée électriquement entre la deuxième borne d'alimentation (BIN2) et la première masse (GND1).

5. Dispositif de pilotage (DP) d'un moteur électrique selon l'une quelconque des revendications précédentes dans lequel ladite première tension est une tension inférieure à 80V et ladite deuxième tension (V2) est une tension supérieure ou égale à 80V.

6. Système de propulsion comprenant un dispositif de pilotage (DP) selon l'une quelconque des revendications 1 à 5 et un moteur électrique piloté par ledit dispositif de pilotage.

7. Système de propulsion selon la revendication précédente comprenant en outre une première batterie délivrant ladite première tension et connectée à ladite première borne et à ladite deuxième borne d'alimentation dudit deuxième connecteur d'alimentation électrique et une deuxième batterie délivrant ladite deuxième tension audit deuxième circuit électronique.

8. Engin de mobilité, par exemple un véhicule, comprenant un dispositif de pilotage d'un moteur électrique selon l'une quelconque des revendications 1 à 5 ou un système de propulsion selon l'une quelconque des revendications 6 à 7.
